Europäisches Patentamt

European Patent Office

Office européen des brevets

(11) Veröffentlichungsnummer: **0 398 161**
**A2**

(12) **EUROPÄISCHE PATENTANMELDUNG**

(21) Anmeldenummer: **90108835.1**

(22) Anmeldetag: **10.05.90**

(51) Int. Cl.⁵: **G02B 6/36**

(30) Priorität: **18.05.89 DE 8906127 U**

(43) Veröffentlichungstag der Anmeldung:
**22.11.90 Patentblatt 90/47**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Krausse, Peter, Dipl.-Ing.**
**Flurstrasse 1**
**D-8011 Aschheim(DE)**

(54) **Lichtwellenleiter-Steckverbindung.**

(57) Bei Lichtwellenleiter-Steckverbindern werden beidseits in einer Hülse Metallstifte in denen ein Lichtwellenleiter fixiert ist, eingesteckt und über diese Hülse aufeinander zentriert. Für den Gestelleinbau sind gestell- und einschubseitig Steckelemente d.h. Hülse (2) und Stecker (1, 7) derart geformt, daß sie gemeinsam mit elektrischen Steckelementen z. B. Koaxialsteckern gemäß DIN 41612 auf einer Leiste zusammengefaßt werden können.

**FIG 1**

EP 0 398 161 A2

## Lichtwellenleiter-Steckverbindung

Die Erfindung bezieht sich auf eine Lichtwellenleiter-Steckverbindung für Stecker, bei denen das Ende der Lichtwellenleiter-Faser jeweils in einer Kapillare eines Steckerstiftes fixiert ist, dessen Frontseite plan mit der Lichtwellenleiter-Faser endet, wobei eine sowohl für den Einbau zum Beispiel in eine Gestellwand oder einen Einschub vorgesehene Schutz- und Befestigungshülse eine Führungsbuchse für die Aufnahme der Steckerstifte aufweist.

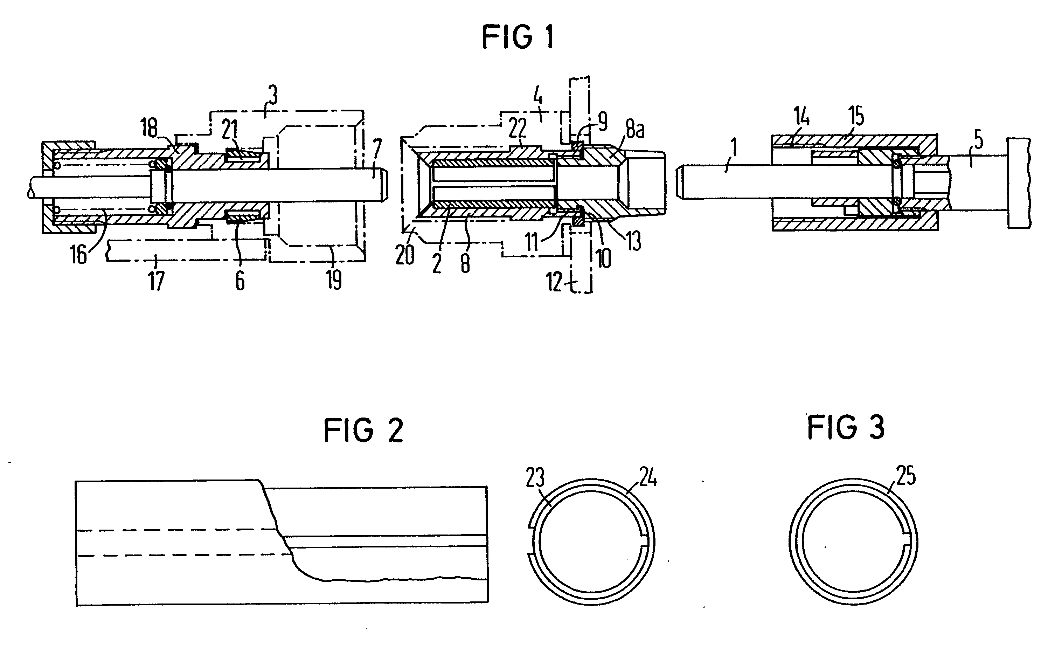

Eine derartige Anordnung ist in der EP-Patentanmeldung 0 164 531 insbesondere Figur 1 dargestellt und erläutert. Die dortige Neuerung ist für einzelne Lichtwellenleiter-Anschlüsse gedacht.

Der Erfindung liegt die Aufgabe zugrunde, eine Anordnung anzugeben, die es erlaubt, solche Lichtwellenleiter-Steckverbindungen gemeinsam mit anderen elektrischen Steckelementen auf gestellseitigen und einschubseitigen Leisten anzuordnen.

Diese Aufgabe wird bei einer Einrichtung der eingangs genannten Art neuerungsgemäß dadurch gelöst, daß sowohl die Schutz-und Befestigungshülse als auch der zugehörige eine Steckerstift auf Leisten angeordnet sind, die als sogenannte Mischleisten auch andere Steckelemente, beispielsweise Koaxialstecker tragen und entweder gestell- oder einschubseitig zugeordnet sind.

Weitere vorteilhafte Ausbildungen der Erfindung finden sich in den Unteransprüchen.

Nachstehend wird die Erfindung anhand eines Ausführungsbeispiels näher erläutert.

Die Figur 1 zeigt das Ausführungsbeispiel für zwei Lichtwellenleiter-Stecker, die über eine Führungsbuchse aufeinander zentriert werden.

Die Figuren 2 und 3 zeigen bevorzugte Ausführungsbeispiele der Führungsbuchse.

In Mischleisten, zum Beispiel DIN 41612 oder Siedecon sollen an Stelle von Koax- bzw. Hochstromkontakten, single-modefähige Lichtwellenleiter-Steckverbinder eingesetzt werden. Diese Lichtwellenleiter-Steckverbinder sollen in Anlehnung an DIN 47256 und 47257 (Lichtwellenleiter-Steckverbinder mit Schraubanschluß bzw. für Einschubsysteme) das Prinzip Stift-Hülse-Stift besitzen, wobei der Durchmesser des Stiftes bzw. der Bohrung der Hülse, wie in dem oben genannten DIN-Steckverbinder, 2,5 mm betragen soll. Die Steckbedingungen sollen denen der in der Mischleiste verwendeten Sonder-Kontakten entsprechen.

Die optischen Kennwerte sollen den oben genannten Lichtwellenleiter-DIN-Steckverbindern entsprechen.

Wie an sich bereits durch die eingangs genannte europäische Patentanmeldung bekannt, werden zwei Steckerstifte 1, 7, die die eigentlichen Lichtwellenleiter konzentrisch halten, über eine Zentrier- und Führungsbuchse 2 zusammengeführt und axial verspannt. Hierzu ist das eine Steckelement 5, ein sogenannter Handstecker, mit dem Steckerstift 1 in eine Schutz- und Befestigungshülse 8, 8a, hier von der rechten Seite, einsteckbar. Zur Befestigung und Sicherung des Handsteckers 5 ist die Überwurfmutter 15 vorgesehen, die front- und innenseitig ein Innengewinde 14 hat, das auf das Außengewinde 13 des Innentrichterelementes 8a aufschraubbar ist.

Beim anderen Steckelement ist der ebenso ausgebildete Steckerstift 7 axial federnd 16 in einer Steckerfassung 18 gehalten. Diese Steckerfassung ist wiederum in einer Steckerleiste 3 gehalten. Die Steckerleiste 3 kann beispielsweise auf der Leiter platte 17 eines Einschubs angeordnet sein. Diese Leiste gemäß der schon erwähnten DIN 41612 hat einen Trichter 19, der mit der konusförmigen Front 20 des Gegenelements 4 korrespondiert. Die Befestigung der Steckerfassung 18 erfolgt zweckmäßig nach dem snap-in-Verfahren über einen frontseitig konisch geformten umfangsseitig geschlitzten Ring 6, der in einer entsprechenden Nut 21 der Steckerfassung 18 liegt. Anstelle dieser Befestigung kann natürlich auch eine Schraubbefestigung zum Beispiel mittels einer Ringmutter vorgesehen werden.

Die eigentliche Führungsbuchse zur Zentrierung der beiden Stifte 1 und 7 befindet sich auf einer Gegenleiste 4, die ebenfalls als Mischleiste ausgebildet ist. Diese Mischleiste 4 ist vorzugsweise gestellseitig mit einer Wand 12 verbunden. Die Führungsbuchse 2 ist, wie an sich bekannt, schwimmend in einer Schutz- und Befestigungshülse 8, 8a gelagert. Die Schutz- und Befestigungshülse besteht im Ausführungsbeispiel aus zwei axial über das Gewinde 11 miteinander verschraubbaren Teilen 8 und 8a. Das eine Element der Schutzhülse hat gleichzeitig zur Befestigung in der Leiste 4 einen Bund 22, der den Innenanschlag in der Befestigungsleiste 4 bildet. Den anderen Anschlag bildet ein Ring oder eine Beilagscheibe 9, die beim Zusammenschrauben der beiden Teile 8, 8a über einen Kragen 10 an Teil 8a gegen eine entsprechende Kante der Befestigungsleiste 4 drückt. Dadurch werden in vorteilhafter Weise gleichzeitig die beiden Elemente 8, 8a der Schutz- und Befestigungshülse über ein konisches Gewindestück 11 miteinander und mit der Befestigungsleiste 4 verbunden.

Dadurch wird aufbauend auf die Ausgangsteile (zwei Stifte 1, 7 und eine Buchse 2), aus vorzugsweise harten Materialien, durch Variieren der Außenteile, eine weitere single-modefähige Lichtwellenleiter-Steckverbindung geschaffen, die an Stelle von üblichen Sonderkontakten (Koax, Hochstrom) in Mischleisten 3, 4 zum Beispiel DIN 41612 oder Siedecon, eingesetzt werden.

Dieser Handstecker 5 entspricht auch dem in der DIN 47256 beschriebenen Lichtwellenleiter-Steckverbinder mit Schraubverbindung Typ LSA. Im Gegensatz zu den bisherigen Snap-in-Kontakten, wird bei dem hier beschriebenen Lichtwellenleiter-Steckverbinder eine Seite des Steckers, und zwar die buchsen-2-tragende und vorzugsweise Gestellseite, in die Leiste 4 eingeschraubt. Die zweite Seite mit dem gefederten Stift 1 ist wie bei den anderen Sonderkontakten üblich mit einer Snap-in-Feder 6 ausgeführt.

Die Führungsbuchse 2 kann, wie an sich bekannt, axial längsgeschlitzt und aus Keramik und Hartmetall bestehen, oder wird zweckmäßig, wie in Figur 2 gezeigt, aus zwei übereinandergeschobenen Buchsen gebildet. Die Innenbuchse 23 ist dabei wie üblich gestaltet und die äußere Buchse 24 kann als ebenfalls längsgeschlitzte Buchse verspannend über diese geschoben werden. Die beiden Längsschlitze werden dabei vorzugsweise um 180° in Umfangsrichtung gegeneinander verdreht angeordnet. Dadurch ergibt sich eine gleichmäßig konzentrische Führung für die beiden Steckerstifte 1 und 7.

Wie in der Figur 3 angedeutet, kann die äußere Buchse 25 auch als elastische, ungeschlitzte ausgeführt sein und zum Beispiel aus Gummi oder einem elastischen Kunststoff bestehen. Auch dies ergibt den oben erwähnten Effekt.

## Ansprüche

1. Lichtwellenleiter-Steckverbindung für Stecker, bei denen das Ende der Lichtwellenleiter-Faser jeweils in einer Kapillare eines Steckerstiftes (1, 7) fixiert ist, dessen Frontseite plan mit der Lichtwellenleiter-Faser endet, wobei eine sowohl für den Einbau zum Beispiel in eine Gestellwand oder einen Einschub vorgesehene Schutz- und Befestigungshülse (8, 8a) eine Führungsbuchse (2) für die Aufnahme der Steckerstifte (1, 7) aufweist, **dadurch gekennzeichnet,** daß sowohl die Schutz- und Befestigungshülse (8) als auch der zugehörige eine Steckerstift (7) auf Leisten (3, 4) angeordnet sind, die als sogenannte Mischleisten auch andere Steckelemente, beispielsweise Koaxialstecker tragen und entweder gestell-oder einschubseitig zugeordnet sind.

2. Lichtwellenleiter-Steckverbindung nach Anspruch 1, **dadurch gekennzeichnet,** daß die vorzugsweise gestellseitig angeordnete Schutz- und Befestigungshülse (8, 8a) aus zwei koaxial zusammenschraubbaren Teilen besteht, zwischen denen schwimmend die Führungsbuchse (2) für die Stecker (1, 2) angeordnet ist.

3. Lichtwellenleiter-Steckverbindung nach Anspruch 2, **dadurch gekennzeichnet,** daß die Schutz-und Befestigungshülse (8, 8a) beidseits Einführungstrichter für die Steckerstifte hat.

4. Lichtwellenleiter-Steckverbindung nach einem der vorhergehenden Ansprüche, **dadurch gekennzeich**net, daß das eine Trichterelement (8a) der Schutz- und Befestigungshülse mit einem Kragen (10) versehen ist, der über einen Ring (9) das andere Element der Schutz- und Befestigungshülse (8) mit der Leiste (4) verspannt.

5. Lichtwellenleiter-Steckverbindung nach einem der vorhergehenden Ansprüche, **dadurch gekennzeichnet,** daß der eine Steckerstift (7), der ebenfalls in einer Gegenleiste vorzugsweise des Einschubs befestigt ist, axial federnd (16) ausgebildet ist.

6. Lichtwellenleiter-Steckverbindung nach einem der vorhergehenden Ansprüche, **dadurch gekennzeichnet,** daß der andere Steckerstift (1), vorzugsweise gestellseitig angeordnet, als Handstecker (5) axial starr ausgebildet und mittels einer Überwurfmutter auf ein Gewinde (13) des Trichterelementes (8a) aufschraubbar ist.

7. Lichtwellenleiter-Steckverbindung nach Anspruch 5, da**durch gekennzeichnet,** daß die Befestigung der Steckerfassung (18) des axial bewegbaren Steckers über einen frontseitig konisch geformten und umfangsseitig geschlitzten Federring (6) erfolgt, der in eine Bohrung der Befestigungsleiste (3) einschnappbar ist.

FIG 1

FIG 2

FIG 3